# EUROPÄISCHE PATENTSCHRIFT

(11) **EP 0 601 493 B1**
(45) Veröffentlichungstag und Bekanntmachung des Hinweises auf die Patenterteilung: **21.05.1997**
(21) Anmeldenummer: 93119500.2
(22) Anmeldetag: 03.12.1993
(51) Int. Cl.: A47L 9/00

(54) **Steuervorrichtung in einer gebläseabhängigen Absaugleitung**
Blower depending control device in a suction hose
Dispositif de contrôle dépendant du souffle dans une conduite d'aspiration

(30) Priorität: 05.12.1992 DE 4241075
(43) Veröffentlichungstag der Anmeldung: 15.06.1994
(73) Patentinhaber: Peters, Gerhard, 33175 Bad Lippspringe (DE)
(72) Erfinder: Peters, Gerhard, 33175 Bad Lippspringe (DE)
(74) Vertreter: Hanewinkel, Lorenz, Dipl.-Phys.

(56) Entgegenhaltungen:
- DE-A- 3 001 116
- DE-A- 3 722 815
- DE-A- 3 840 831
- DE-C- 3 711 485

## Beschreibung

Die Erfindung bezieht sich auf eine Steuervorrichtung einer Absauganlage zum gleichzeitigen Absaugen mehrerer Maschinen od. dgl., bei der automatisch beim Einschalten einer Maschine ein Absperrorgan den Querschnitt der jeweiligen Absaugleitung freigibt und beim Abschalten absperrt, mit einer in der Absaugleitung angeordneten Kammer mit Beiluft-Eintritt, in der das Absperrorgan in Form einer Klappe um eine kammerseitige Achse mittels Huborgan in die Öffnungs- und Schließstellung für den Abluftquerschnitt und den Beiluft-Eintritt lagert.

Aufgabe der Erfindung ist es, eine derartige, aus der DE-PS 37 11 485 bekannte Steuervorrichtung in der Steuerung der notwendigen Beiluftmenge zur Aufrechterhaltung der Mindestsoggeschwindigkeit im Absaugsystem zu verbessern.

Diese Aufgabe wird erfindungsgemäß durch die kennzeichnenden Merkmale des Patentanspruches 1 gelöst; die sich daran anschließenden Unteransprüche beinhalten Gestaltungsmerkmale, welche vorteilhafte und förderliche Weiterbildungen der Aufgabenlösung darstellen.

Die erfindungsgemäße Steuervorrichtung für eine Absauganlage weist in ihrer Kammer eine Hauptklappe auf, die über ein eigenes Betätigungsorgan in eine den Durchfluß-Querschnitt für die Abluft verschließenden, und in eine den Durchfluß-Querschnitt vollkommen öffnenden Stellung gebracht wird, d.h., diese Hauptklappe wird in zwei bestimmte Stellungen bewegt.

Dieser Hauptklappe ist eine Beiluftklappe zugeordnet, welche unter der Einwirkung eines Federmechanismusses steht, und in Abhängigkeit von der Hauptklappe in eine den Beiluft-Eintritt verschließende und den Beiluft-Eintritt mehr oder weniger weit öffnende Stellung gebracht wird, wodurch von dieser Beiluftklappe die unterdruckabhängige Steuerfunktion übernommen wird.

Beim Absaugen der Maschine(n) ist die Hauptklappe geöffnet und die Beiluftklappe geschlossen, so daß keine Nebenluft in das Absaugsystem eintreten kann.

Die schwenkbare Beiluftklappe wird bei nicht benutzter und somit in der Zu-Stellung befindlicher Hauptklappe in die den Beiluft-Eintritt öffnende Stellung gebracht, wodurch die erforderliche Beiluftmenge von außen zugeführt werden kann und dadurch die Mindestsoggeschwindigkeit im Absaugsystem aufrechterhalten wird.

Die notwendige Beiluft kann durch die Beiluftklappe wunschgemäß zugeführt werden, d.h., bei Abluftbetrieb nur Kaltluft und bei Rückluftbetrieb nur Warmluft.

Diese Steuervorrichtung mit Hauptklappe und Beiluftklappe und deren Betätigungsorgane ist äußerst einfach aufgebaut, arbeitet sicher und hat durch ihre besondere Abluft- und Beiluftsteuerung dem Absaugsystem einen gesteigerten Wirkungsgrad gegeben.

Auf den Zeichnungen sind Ausführungsbeispiele der Erfindung dargestellt, welche nachfolgend näher erläutert werden. Es zeigt:
- **Fig. 1**: eine Seitenansicht im teilweisen Schnitt einer in einer Absaugleitung angeordneten Steuervorrichtung für die Absaugluft, mit einer Kammer und einer darin schwenkbar gelagerten Hauptklappe, in der den Durchflußquerschnitt der Kammer absperrenden Schließstellung und einer Beiluftklappe, in der einen Beiluft-Eintritt der Kammer öffnenden Pendellage,
- **Fig. 2**: eine Seitenansicht im teilweisen Schnitt derselben Steuervorrichtung mit in die vollkommene Öffnungsstellung verschwenkter Hauptklappe und gleichzeitig in die Schließstellung des Beiluft-Eintrittes verschwenkter Beiluftklappe,
- **Fig. 3**: eine schematische Seitenansicht einer weiteren Steuervorrichtung mit der Beiluftklappe zugeordnetem Kniehebel mit Zugfeder und Dämpfungsorgan in der Pendelstellung der Beiluftklappe und Absperrstellung der Hauptklappe,
- **Fig. 4**: eine schematische Seitenansicht mit teilweiser perspektivischer Ergänzung einer weiteren Steuervorrichtung mit der Beiluftklappe zugeordnetem Seilzug mit integrierter Feder und Dämpfungsorgan und der Hauptklappe zugeordnetem Huborgan und Zugfeder in der Absperrstellung der Hauptklappe und Pendelstellung der Beiluftklappe,
- **Fig. 5**: eine schematische Seitenansicht einer weiteren Steuervorrichtung mit Spannschlössern für die Zugfedern,
- **Fig. 6**: eine schematische Draufsicht auf die Steuervorrichtung gemäß Fig. 5.

Die Steuervorrichtung (1) in einer/für eine gebläseabhängige Absaugleitung (2) weist eine in der Absaugleitung (2) angeordnete Kammer (3) mit Beiluft-Eintritt (4) auf, in der eine Hauptklappe (5) um eine kammerseitige Achse (6) mittels Huborgan (7) in die Öffnungs- und Schließstellung (Auf- und Zu-Stellung) für den Abluftquerschnitt in der Kammer (3) und den Beiluft-Eintritt (4) lagert.

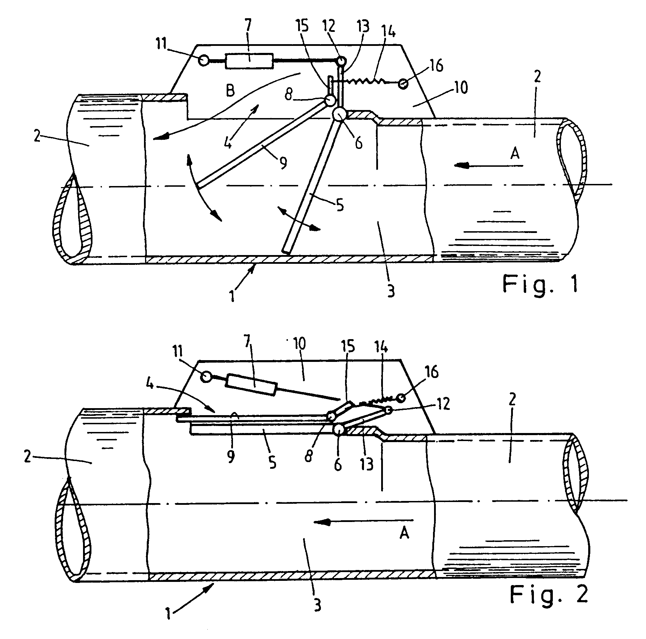

Dieser Hauptklappe (5) ist eine um eine Achse (8) schwenkbare, mit einem Fördermechanismus (14) gekoppelte Beiluftklappe (9) zugeordnet, welche in Abhängigkeit von der Hauptklappe (5) in eine Pendellage und in eine Schließlage bringbar ist. In der Absperrstellung der Hauptklappe (5) nimmt die Beiluftklappe (9) eine pendelstellung ein und öffnet den Beiluft-Eintritt (4) mehr oder weniger weit (Fig. 1), wodurch die Mindestsoggeschwindigkeit in der Absaugleitung (2) aufrechterhalten wird, und durch die Hauptklappe (5) wird die Beiluftklappe (9) bei der Hauptklappen-Verschwenkung in deren Öffnungsstellung in die den Beiluft-Eintritt (4) absperrende Schließstellung verschwenkt (Fig. 2).

Der Beiluft-Eintritt (4) und die Beiluftklappe (9) sind in Abluft-Durchströmrichtung (A) hinter der Hauptklappe (5) in der Kammer (3) angeordnet.

Das Huborgan (7) der Hauptklappe (5) ist von einem pneumatisch oder elektromagnetisch gesteuerten Zylinder gebildet, welcher mit einem Ende an einer an der Kammer (3) nach außen abstehenden Lagerung (10) im Schwenkpunkt (11) und mit dem anderen Ende an einem Hebel (13) der Hauptklappe (5) im Schwenkpunkt (12) lagert.

Die Beiluftklappe (9) steht unter Einwirkung einer Zugfeder (14), welche auf die Beiluftklappe (9) entgegen der Beiluft-Einströmung (B) leicht schließend einwirkt, und welche mit einem Ende an einem Hebel (15) der Beiluftklappe (9) und mit ihrem anderen Ende im Punkt (16) an der Lagerung (10) festgelegt ist.

Die Hauptklappe (5) und die Beiluftklappe (9) sind jeweils um eine eigene, im parallelen Abstand zueinander verlaufende Achse (6, 8) an der Lagerung (10) oder einem Montagerahmen (17) schwenkbar gehalten; es besteht jedoch auch die Möglichkeit, beide Klappen (5, 9) um eine gemeinsame Achse (6 oder 8) schwenkbar zu lagern, wobei die Klappen (5, 9) zum Aneinanderliegen in der Schließlage gemäß Fig. 2 mit abgekröpften Lagerstellen um die Achse (6 oder 8) fassen.

Der Hebel (13, 15) beider Klappen (5, 9) geht jeweils von deren Schwenklagerung (6, 8) ab und verläuft unter einem Winkel zur Klappe (5, 9) nach außen in Klappenverlängerung.

Das Huborgan (7) der Hauptklappe (5) liegt im Bereich des Beiluft-Eintrittes (4) und erstreckt sich von der Hauptklappe (5) in Abluft-Durchströmrichtung (A), und die Feder (14) der Beiluftklappe (9) verläuft von der Klappe (9) in entgegengesetzter Richtung.

Die Kammer (3) besitzt einen mindestens teilweise eckigen Querschnitt, hat in bevorzugter Weise einen wappenschildartigen, quadratischen oder kreisförmigen Querschnitt und läßt sich als separates Bauteil in die Absaugleitung (2) einsetzen.

Mindestens die Hauptklappe (5) ist entsprechend dem Durchströmquerschnitt der Kammer (3) in ihrer Form ausgebildet.

Die Kammer (3) hat in bevorzugter Weise für die Klappenlagerung einen Montagerahmen (17), der einen Lagerbock (10) für das Huborgan (7) trägt.

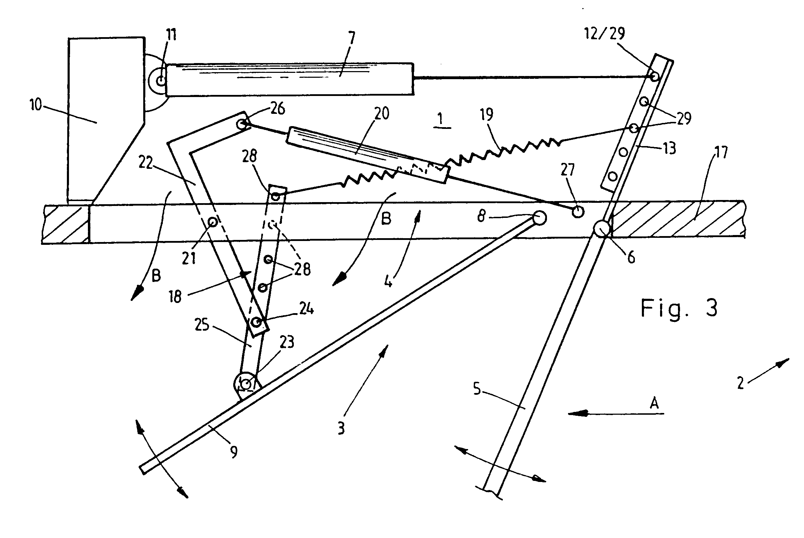

Gemäß der weiteren Ausführung der Steuervorrichtung (1) nach Fig. 3 ist die Beiluftklappe (9) im Abstand zu ihrer Schwenkachse (8) mit einem am Montagerahmen (17) schwenkbar gelagerten Kniehebel (18) gelenkig verbunden und der Kniehebel (18) ist einerseits mit einer an der Hauptklappe (5) angreifenden Zugfeder (19) und andererseits mit einem am Montagerahmen (17) angelenkten Dämpfungsorgan (20), vorzugsweise Gasfeder, verbunden.

Der Kniehebel (18) weist einen am Montagerahmen (17) in einer Schwenkachse (21) gelagerten, doppelarmigen Winkelhebel (22) und einen doppelarmigen, mit einem Ende in einer ersten Schwenkachse (23) mit der Beiluftklappe (9) und in einer zweiten Schwenkachse (24) mit dem Winkelhebel (22) gelenkig verbundenen Hebel (25) auf.

Die Zugfeder (19) ist zwischen dem freien Ende des zweiten Hebels (25) und einem verlängerten Hebel (13) der Hauptklappe (5) angeordnet und das Dämpfungsorgan (20) liegt zwischen dem freien Ende des Winkelhebels (22) und dem Montagerahmen (17) in den Gelenkpunkten (26, 27).

Der zweite Hebel (25) des Kniehebels (18) und der Hebel (13) der Hauptklappe (5) haben jeweils mehrere Befestigungsstellen (28, 29) für die Zugfeder (19) zur Einstellung der Zugkraft auf die Beiluftklappe (9). Diese Befestigungsstellen lassen sich jeweils von einer Reihe an Löchern (28, 29) oder Zapfen bilden, an denen die Zugfeder (19) einstellbar festlegbar ist.

Das Huborgan (7) lagert mit einem Ende in der Schwenkachse (11) am Lagerbock (10) und greift mit seinem anderen Ende in der Schwenkachse (12) am Hebel (13) oder in einer Befestigungsstelle (29) des Hauptklappenhebels (13) an.

Die Hauptklappe (5) wird durch den Zylinder (7) in die Auf- und Zu-Stellung geschwenkt, wobei bei der Zu-Stellung die Zugfeder (19) in ihrer Spannung nachläßt und die Beiluftklappe (9) über den Kniehebel (18) in die Öffnungsstellung schwenken kann, wie in Fig. 3 gezeigt. Beim Verschwenken der Hauptklappe (5) in die Auf-Stellung wird die Zugfeder (19) gespannt und zieht über den Kniehebel (18) die Beiluftklappe (9) in die den Beilufteintritt (4) verschließende Stellung, in der die Hauptklappe (5) unter der Beiluftklappe (9) liegt.

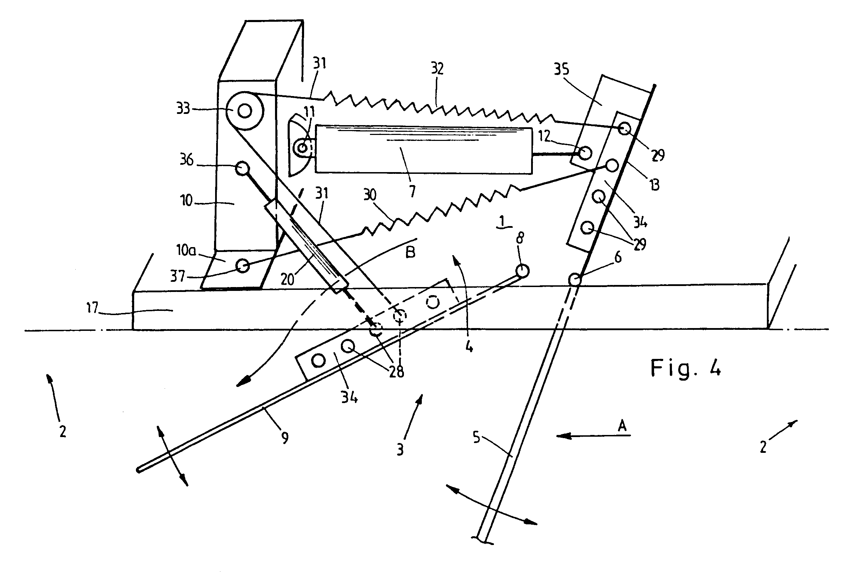

Fig. 4 zeigt eine weitere bevorzugte Ausführung der Steuervorrichtung (1). Hierbei ist die Hauptklappe (5) einerseits mit einem diese in die die Absaugleitung (2) freigebende Auf-Stellung verschwenkenden Huborgan (7) in Form eines pneumatischen oder elektromagnetisch gesteuerten Zylinders und andererseits mit einer die Hauptklappe (5) in die die Absaugleitung (2) absperrenden Zu-Stellung verschwenkenden Zugfeder (30) verbunden. Die Beiluftklappe (9) ist mit einem an der Hauptklappe (5) und an der Beiluftklappe (9) angreifenden, die Beiluftklappe (9) in Abhängigkeit von der Hauptklappe (5) in die den Beilufteintritt (4) absperrenden Schließstellung und in eine Pendelstellung freigebenden Seilzug (31) mit integrierter Zugfeder (32) und einem Dämpfungsorgan (20) in Form einer Gasfeder gekoppelt.

Das Huborgan (7) greift zwischen dem verlängerten Hebel (13) der Hauptklappe (5) und dem Lagerbock (10) des Montagerahmens (17) in den Achsen (11, 12) gelenkig an.

Der Seilzug (31) ist mit einem Ende am verlängerten Hebel (13) der Hauptklappe (5) befestigt, um eine am Lagerbock (10) gehaltene Rolle (33) geführt und mit seinem anderen Ende an der Beiluftklappe (9) im Abstand zu deren Schwenkachse (8) festgelegt.

Das Dämpfungsorgan (20) erstreckt sich mit gelenkiger Lagerung zwischen Lagerbock (10) und Beiluftklappe (9).

Der geradlinig zur Hauptklappe (5) verlängerte Hebel (13) und die Beiluftklappe (9) haben jeweils mehrere Befestigungsstellen (28, 29) für eine verstellbare Befestigung von Seilzug (31), Zugfeder (30) und Dämpfungsorgan (20) zur Zug- und Druckkrafteinstellung.

Die Befestigungsstellen (28, 29) sind von am verlängerten Hebel (13) der Hauptklappe (5) und an der Beiluftklappe (9) festgelegten, quer zu deren Schwenkachsen (6, 8) verlaufenden Leisten (34) mit je einer Reihe an Löchern (28, 29) oder Zapfen gebildet und der verlängerte Hebel (13) der Hauptklappe (5) hat einen Schwenklagerbock (35) für das Huborgan (7).

(36) ist der Gelenkpunkt für ein Ende des Dämpfungsorganes (20) am Lagerbock (10) und das andere Ende des Dämpfungsorganes (20) greift gelenkig an einer Befestigungsstelle (28) der Beiluftklappe (9) an.

Die Zugfeder (30) für die Hauptklappe (5) ist mit einem Ende am Lagerbock (10), vorzugsweise einer diesen auf dem Montagerahmen (17) tragenden Querlasche (10a) im Punkt (37) festgelegt, und mit ihrem anderen Ende verstellbar in einer der Befestigungsstellen (29) an der Hauptklappe (5) gehalten.

Die Hauptklappe (5) wird durch die Zugfeder (30) in die den Absaugkanal (2) absperrende Zu-Stellung verschwenkt, wobei gleichzeitig die Beiluftklappe (9) durch den Seilzug (31) in die den Beiluft-Eintritt (4) öffnende Stellung geschwenkt wird, so daß Beiluft zur Aufrechterhaltung der Mindestsogkraft in der Kammer (3) und der Absaugleitung (2) einströmen kann. Das Dämpfungsorgan (20) hält die Beiluftklappe (9) in ihrer pendelstellung und verhindert eine geräuschbildende Flatterbewegung.

Bei Verschwenken der Hauptklappe (5) durch den Zylinder (7) in die den Absaugkanal (2) freigebende Auf-Stellung wird gleichzeitig über den Seilzug (31) die Beiluftklappe (9) in ihre den Beiluft-Eintritt (4) verschließende Stellung hochgeschwenkt und die Hauptklappe (5) legt sich dann unter die Beiluftklappe (9).

Der Federmechanismus für die Beiluftklappe (9) wird gemäß Fig. 1 und 2 von der Feder (14), gemäß Fig. 3 von der Feder (19), dem Kniehebel (18) und dem Dämpfungsorgan (20) und gemäß Fig. 4 vom Seilzug (31) mit integrierter Feder (32) und dem Dämpfungsorgan (20) gebildet.

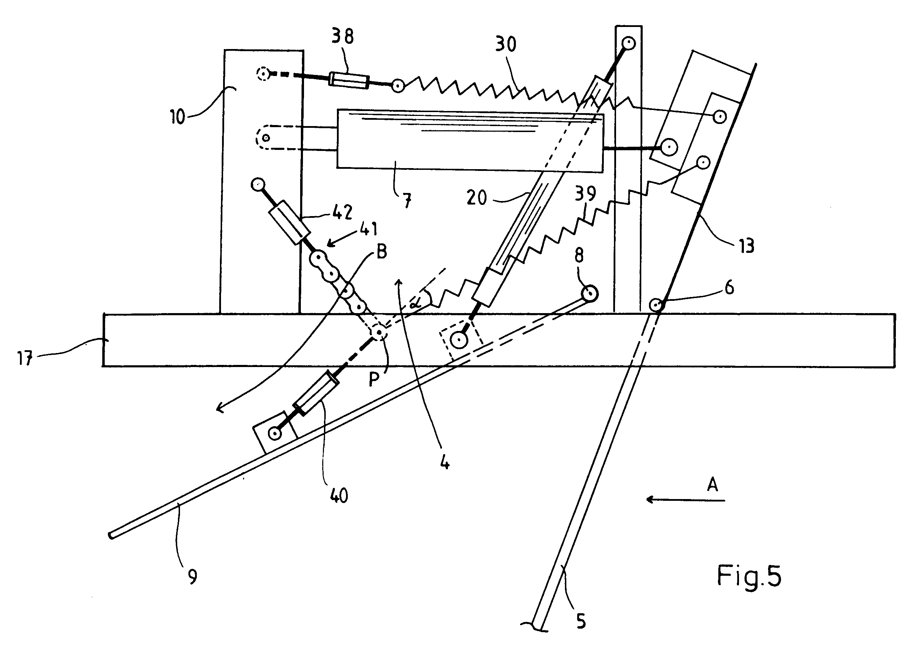

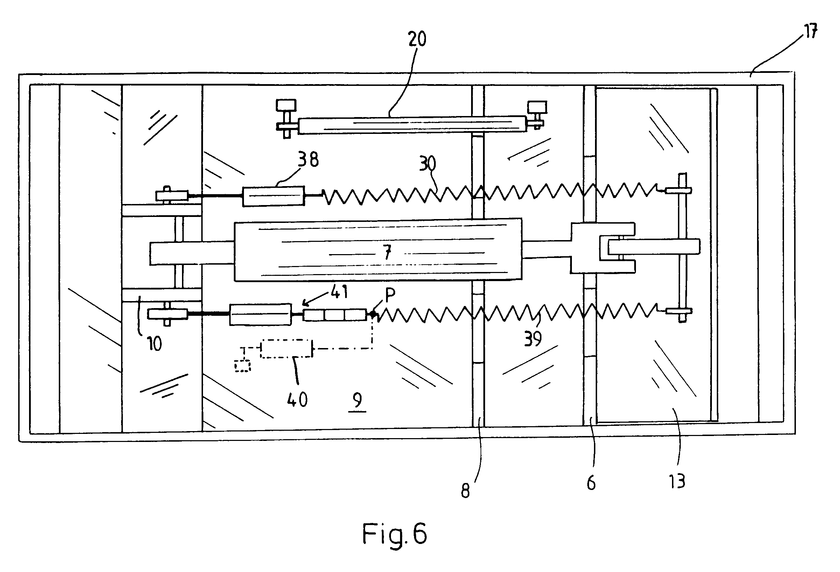

In einer weiteren Ausführungsform der Erfindung (vgl. Fig. 5 und 6) weist die die Hauptklappe (5) in die Zu-Stellung verschwenkende Zugfeder (30) ein Spannschloß (38) zur manuellen Einstellbarkeit der Zugfeder-Vorspannung auf.

Die Beiluftklappe (9) ist mit einer am verlängerten Hebel (13) der Hauptklappe (5) und an der Beiluftklappe (9) angreifenden Zugfeder (39) mit Spannschloß (40) gekoppelt. Diese Zugfeder (39) verschwenkt die Beiluftklappe (9) in Abhängigkeit von der Hauptklappe (5) in die den Beiluft-Eintritt (4) absperrende oder freigebende Pendelstellung. Um den Angriffswinkel (α) der Zugfeder (39) an der Beiluftklappe (9) variieren zu können, ist zwischen dem Lagerbock (10) des Montagerahmens (17) und der Zugfeder (39) ein flexibles Einstellglied (41), vorzugsweise eine Gelenkkette mit Spannschloß (42), angeordnet. Die Zugfeder (39), das Einstellglied (41) und das Spannschloß (40) für die Zugfeder (39) sind an einem gemeinsamen Angriffspunkt (P) angelenkt und laufen dort sternförmig zusammen.

## Patentansprüche

1. Steuervorrichtung einer Absauganlage zum gleichzeitigen Absaugen mehrerer Maschinen od. dgl., bei der automatisch beim Einschalten einer Maschine ein Absperrorgan den Querschnitt der jeweiligen Absaugleitung (2) freigibt und beim Abschalten absperrt, mit einer in der Absaugleitung (2) angeordneten Kammer (3) mit Beiluft-Eintritt (4), in der das Absperrorgan in Form einer Klappe (5) um eine kammerseitige Achse (6) mittels Huborgan (7) in die Öffnungs- und Schließstellung für den Abluftquerschnitt und den Beiluft-Eintritt (4) lagert, dadurch gekennzeichnet, daß die Klappe (5) als eine durch ein Huborgan (7) in eine Auf- und eine Zu-Stellung schwenkbare Hauptklappe (5) ausgebildet und dieser Hauptklappe (5) eine separate um eine Achse (8) schwenkbare, mit einem Federmechanismus (14/18, 19, 20/31, 32, 20) gekoppelte Beiluftklappe (9) zugeordnet ist und daß dabei die Hauptklappe (5) und die Beiluftklappe (9) um eine gemeinsame Achse oder jeweils um eine eigene, im parallelen Abstand zueinander verlaufende Achse (6, 8) an der Lagerung (10) oder einem Montagerahmen (17) der Kammer (3) schwenkbar gehalten sind.

2. Steuervorrichtung nach Anspruch 1, dadurch gekennzeichnet, daß die Beiluftklappe (9) in der Absperrstellung (Zu-Stellung) der Hauptklappe (5) eine den Beiluft-Eintritt (4) mehr oder weniger weit öffnende und Beiluft zur Aufrechterhaltung der Mindestsoggeschwindigkeit in der Kammer (3) und der Absaugleitung (2) einlassende Pendelstellung einnimmt und bei der Verschwenkung der Hauptklappe (5) in die Auf-Stellung durch die Hauptklappe (5) und den Federmechanismus (14/18, 19, 20/31, 32, 20) in die den Beiluft-Eintritt (4) absperrende Schließstellung verschwenkbar ist.

3. Steuervorrichtung nach Anspruch 1 oder 2, dadurch gekennzeichnet, daß der Beiluft-Eintritt (4) und die Beiluftklappe (9) in Abluft-Durchströmrichtung (A) hinter der Hauptklappe (5) in der Kammer (3) angeordnet sind.

4. Steuervorrichtung nach einem der Ansprüche 1 bis 3, dadurch gekennzeichnet, daß das Huborgan (7) der Hauptklappe (5) von einem pneumatisch oder elektromagnetisch gesteuerten Zylinder gebildet ist, welcher mit einem Ende an einer an der Kammer (3) nach außen abstehenden Lagerung (10) und mit dem anderen Ende an einem Hebel (13) der Hauptklappe (5) in den Schwenkpunkten (11, 12) angelenkt ist.

5. Steuervorrichtung nach einem der Ansprüche 1 bis 4, dadurch gekennzeichnet, daß die Beiluftklappe (9) unter Einwirkung einer Zugfeder (14) steht, welche auf die Beiluftklappe (9) entgegen der Beiluft-Einströmung (B) leicht schließend einwirkt, und welche mit einem Ende an einem Hebel (15) der Beiluftklappe (9) und mit ihrem anderen Ende an der Lagerung (10) festgelegt ist.

6. Steuervorrichtung nach einem der Ansprüche 1 bis 5, dadurch gekennzeichnet, daß die Hebel (13, 15) der Hauptklappe (5) und der Beiluftklappe (9) von der Schwenklagerung (6, 8) aus in winkliger Verlängerung zu den Klappen (5, 9) abstehen.

7. Steuervorrichtung nach einem der Ansprüche 1 bis 6, dadurch gekennzeichnet, daß das Huborgan (7) von der Hauptklappe (5) in Abluft-Durchströmrichtung (A) abgeht und die Zugfeder (14) der Beiluftklappe (9) in entgegengesetzter Richtung verläuft.

8. Steuervorrichtung nach einem der Ansprüche 1 bis 5, dadurch gekennzeichnet, daß die Beiluftklappe (9) im Abstand zu ihrer Schwenkachse (8) mit einem am Montagerahmen (17) schwenkbar gelagerten Kniehebel (18) gelenkig verbunden ist und der Kniehebel (18) einerseits mit einer an der Hauptklappe (5) angreifenden Zugfeder (19) und andererseits mit einem am Montagerahmen (17) angelenkten Dämpfungsorgan (20), vorzugsweise Gasfeder, verbunden ist (Fig. 3).

9. Steuervorrichtung nach Anspruch 8, dadurch gekennzeichnet, daß der Kniehebel (18) aus einem am Montagerahmen (17) in einer Schwenkachse (21) gelagerten, doppelarmigen Winkelhebel (22) und einem doppelarmigen, mit einem Ende in einer ersten Schwenkachse (23) mit der Beiluftklappe (9) und in einer zweiten Schwenkachse (24) mit dem Winkelhebel (22) gelenkig verbundenen Hebel (25) gebildet ist und die Zugfeder (19) zwischen dem freien Ende des zweiten Hebels (25) und einem verlängerten Hebel (13) der Hauptklappe (5) und das Dämpfungsorgan (20) zwischen dem freien Ende des Winkelhebels (22) und dem Montagerahmen (17) in den Gelenkpunkten (26, 27) angeordnet ist.

10. Steuervorrichtung nach Anspruch 8 oder 9, dadurch gekennzeichnet, daß der zweite Hebel (25) des Kniehebels (18) und der Hebel (13) der Hauptklappe (5) jeweils mehrere Befestigungsstellen (28, 29) für die Zugfeder (19) zur Einstellung der Zugkraft auf die Beiluftklappe (9) haben.

11. Steuervorrichtung nach einem der Ansprüche 1 bis 5, dadurch gekennzeichnet, daß die Hauptklappe (5) einerseits mit einem diese in die die Absaugleitung (2) freigebende AufStellung verschwenkenden Huborgan (7) in Form eines pneumatischen oder elektromagnetisch gesteuerten Zylinders und andererseits mit einer die Hauptklappe (5) in die die Absaugleitung (2) absperrenden Zu-Stellung verschwenkenden Zugfeder (30) verbunden und die Beiluftklappe (9) mit einem an der Hauptklappe (5) und an der Beiluftklappe (9) angreifenden, die Beiluftklappe (9) in Abhängigkeit von der Hauptklappe (5) in die den Beiluft-Eintritt (4) absperrenden Schließstellung und in eine Pendelstellung freigebenden Seilzug (31) mit integrierter Zugfeder (32) und einem Dämpfungsorgan (20) in Form einer Gasfeder gekoppelt ist (Fig. 4).

12. Steuervorrichtung nach Anspruch 11, dadurch gekennzeichnet, daß
das Huborgan (7) zwischen dem verlängerten Hebel (13) der Hauptklappe (5) und dem Lagerbock (10) des Montagerahmens (17) gelenkig angreift,
der Seilzug (31) mit einem Ende am verlängerten Hebel (13) der Hauptklappe (5) befestigt ist, um eine am Lagerbock (10) gehaltene Rolle (33) geführt ist und mit seinem anderen Ende an der Beiluftklappe (9) im Abstand zu deren Schwenkachse (8) angreift, und
das Dämpfungsorgan (20) zwischen Lagerbock (10) und Beiluftklappe (9) in den Schwenkpunkten (36, 28) gelenkig gehalten ist.

13. Steuervorrichtung nach Anspruch 11 oder 12, dadurch gekennzeichnet, daß der verlängerte Hebel (13) der Hauptklappe (5) und die Beiluftklappe (9) jeweils mehrere Befestigungsstellen (28, 29) für eine verstellbare Befestigung von Seilzug (31), Zugfeder (30) und Dämpfungsorgan (20) zur Zug- und Druckkrafteinstellung aufweisen.

14. Steuervorrichtung nach einem der Ansprüche 11 bis 13, dadurch gekennzeichnet, daß die Befestigungsstellen (28, 29) von am verlängerten Hebel (13) der Hauptklappe (5) und an der Beiluftklappe (9) festgelegten, quer zu deren Schwenkachsen (6, 8) verlaufenden Leisten (34) mit je einer Reihe an Löchern (28, 29) oder Zapfen gebildet sind und der verlängerte Hebel (13) der Hauptklappe (5) einen Schwenklagerbock (35) für das Huborgan (7) hat.

15. Steuervorrichtung nach einem der vorstehenden Ansprüche, dadurch gekennzeichnet, daß die die Hauptklappe (5) in die Zu-Stellung verschwenkenden Zugfeder (30) ein Spannschloß (38) zur manuellen Einstellbarkeit der Zugfeder-Vorspannung aufweist.

16. Steuervorrichtung nach einem der vorstehenden Ansprüche, dadurch gekennzeichnet, daß die Beiluftklappe (9) mit einer am verlängerten Hebel (13) der Hauptklappe (5) und an der Beiluftklappe (9) angreifenden, die Beiluftklappe (9) in Abhängigkeit von der Hauptklappe (5) in eine den Beiluft-Eintritt (4) absperrende oder freigebende Pendelstellung verschwenkenden Zugfeder (39) gekoppelt ist, welche ein Spannschloß (40) zur manuellen Einstellung der Zugfeder-Vorspannung aufweist.

17. Steuervorrichtung nach Anspruch 16, dadurch gekennzeichnet, daß zwischen dem Lagerbock (10) des Montagerahmens (17) und der mit der Beiluftklappe (9) gekoppelten Zugfeder (39) ein flexibles Einstellglied (41), vorzugsweise eine Gelenkkette mit Spannschloß (42), zur Einstellung der Zugfeder-Vorspannung und des Zugfeder-Angriffswinkels (α) angeordnet ist.

18. Steuervorrichtung nach Anspruch 17, dadurch gekennzeichnet, daß die Zugfeder (39), das Einstellglied (41) und das Spannschloß (40) für die Zugfeder (39) in einem gemeinsamen Angriffspunkt (P) angelenkt sind und dort sternförmig zusammenlaufen.

## Claims

1. Control apparatus of an exhaust appliance for the simultaneous exhaust of a plurality of engines or the like, in which automatically upon switching on of one of the engines a blocking element frees the cross-section of the respective exhaust pipe (2) and blocks same upon switching off, having a chamber (3) disposed in the exhaust pipe (2) with an additive air inlet (4), in which the blocking element in the form of a flap (5) bears about a shaft (6) on the chamber by means of a hydraulic element (7) into the opening and closing position for the exhaust air cross-section and the additive air inlet (4), characterised in that the flap (5) is formed as a main flap (5) pivotable by a hydraulic element (7) into an open and closed position and this main flap (5) is allocated a separate additive air flap (9) coupled to a spring mechanism (14/18, 19, 20/31, 32, 20) and pivotable about an axis (8), and in that the main flap (5) and the additive air flap (9) are held pivotably about a common axis or respectively about individual axes (6, 8) extending at a parallel distance from one another on the bearing (10) or a mounting frame (17) of the chamber (3).

2. Control apparatus according to claim 1, characterised in that the additive air flap (9) adopts in the blocking position (closed position) of the main flap (5) a pendulum position which opens the additive air inlet (4) to a greater or lesser degree and lets additive air in in order to maintain the minimum suction rate in the chamber (3) and the exhaust pipe (2) and, upon pivoting of the main flap (5) into the open position, by the main flap (5) and the spring mechanism (14/18, 19, 20/31, 32, 20), is pivotable into the additive air inlet (4).

3. Control apparatus according to claim 1 or 2, characterised in that the additive air inlet (4) and the additive air flap (9) are disposed behind the main flap (5) in the chamber (3) in the exhaust air through-flow direction (A).

4. Control apparatus according to one of claims 1 to 3, characterised in that the hydraulic element (7) of the main flap (5) is formed by a pneumatically or electromagnetically controlled cylinder, which is coupled at one end to a bearing (10) projecting outwards from the chamber (3) and at the other end to a lever (13) of the main flap (5) at the pivotal points (11, 12).

5. Control apparatus according to one of claims 1 to 4, characterised in that the additive air flap (9) is under the action of a tension spring (14), which acts on the additive air flap (9) so as to close it slightly against the additive air inflow (B), and which is fixed at one end to a lever (15) of the additive air flap (9) and at its other end to the bearing (10).

6. Control apparatus according to one of claims 1 to 5, characterised in that the levers (13, 15) of the main flap (5) and of the additive air flap (9) projected from the pivoting bearing (6, 8) at an angular extension to the flaps (5, 9).

7. Control apparatus according to one of claims 1 to 6, characterised in that the hydraulic element (7) travels down from the main flap (5) in the exhaust air through-flow direction and the tension spring (14) of the additive air flap (9) extends in the opposite direction.

8. Control apparatus according to one of claims 1 to 5, characterised in that the additive air flap (9) is connected at a distance from its pivotal axis (8) to a knee lever (18) pivotably mounted on a mounting frame (17) and the knee lever (18) is connected on one hand to a tension spring (19) acting on the main flap (5) and on the other hand to a damping element (20), preferably pneumatic spring, coupled to the mounting frame (17) (Fig. 3).

9. Control apparatus according to claim 8, characterised in that the knee lever (18) is formed of a double-armed rectangular lever (22) mounted on the mounting frame in a pivotal axis (21) and a double-armed lever (25) pivotably connected at one end to the additive air flap (9) in a first pivotal axis (23) and to the rectangular lever (22) in a second pivotal axis (24) and the tension spring (19) is disposed between the free end of the second lever (25) and an extended lever (13) of the main flap (5) and the damping element (20) is disposed between the free end of the rectangular lever (22) and the mounting frame (17) in the pivotal points (26, 27).

10. Control apparatus according to claim 8 or 9, characterised in that the second lever (25) of the knee lever (18) and the lever (13) of the main flap (5) respectively have a plurality of fixing points (28, 29) for the tension spring (19) for adjusting the tension force on the additive air flap (9).

11. Control apparatus according to one of claims 1 to 5, characterised in that the main flap (5) is connected on the one hand to a hydraulic element (7) pivoting said flap into the open position freeing the exhaust pipe (2) and taking the form of a pneumatic or electromagnetically controlled cylinder and on the other hand to a tension spring (30) pivoting the main flap (5) into the closed position blocking the exhaust pipe (2) and the additive air flap (9) is coupled to a Bowden cable (31) acting on the main flap (5) and the additive air flap (9) and freeing the additive air flap (9) in accordance with the main flap (5) into the closed position blocking the additive air inlet (4) and into a pendulum position, the Bowden cable having an integrated tension spring (32) and a damping element (20) in the form of a pneumatic spring (Fig. 4).

12. Control apparatus according to claim 11, characterised in that the pneumatic element (7) acts pivotably between the extended lever (13) of the main flap (5) and the bearing block (10) of the mounting frame (17), the Bowden cable (31) is fixed at one end to the extended lever (13) of the main flap (5), is guided about a roller (33) held on the bearing block (10), and acts with its other end on the additive air flap (9) at a distance from its pivotal axis (8), and in that the damping element (20) is pivotably held between the bearing block (10) and the additive air flap (9) at the pivotal points (36, 28).

13. Control apparatus according to claim 11 or 12, characterised in that the extended lever (13) of the main flap (5) and the additive air flap (9) each have a plurality of fixing points (28, 29) for displaceable fixing of Bowden cable (31), tension spring (30) and damping element (20) for adjusting the pull and push forces.

14. Control apparatus according to one of claims 11 to 13, characterised in that the fixing points (28, 29) are formed by strips (34) fixed to the extended lever (13) of the main flap (5) and the additive air flap (9) and extending transverse to their pivotal axes (6, 8), the strips each having a row of holes (28, 29) or lugs, and the extended lever (13) of the main flap (5) having a swivel bearing block (35) for the pneumatic element (7).

15. Control apparatus according to one of the preceding claims, characterised in that the tension spring (30) pivoting the main flap (5) into the closed position has a tightening lock (38) for manually adjusting the tension spring bias.

16. Control apparatus according to one of the preceding claims, characterised in that the additive air flap (9) is coupled to a tension spring (39), which acts on the extended lever (13) of the main flap (5) and on the additive air flap (9) and which pivots the additive air flap (9) in accordance with the main flap (5) into a pendulum position blocking or freeing the additive air inlet (4), and which has a tightening lock (40) for manually adjusting the tension spring bias.

17. Control apparatus according to claim 16, characterised in that between the bearing block (10) of the mounting frame (17) and the tension spring (39) coupled to the additive air flap (9), a flexible setting member (41), preferably a link chain with a tightening lock (42), is provided for adjusting the tension spring bias and the tension spring angle of attack (α).

18. Control apparatus according to claim 17, characterised in that the tension spring (39), the setting member (41) and the tightening lock (40) for the tension spring (39) are coupled in a common point of attack (P) and converge there in a star shape.

## Revendications

1. Dispositif de commande d'une installation d'aspiration desservant plusieurs machines ou appareils analogues, dans le cadre de l'utilisation duquel, lors de la mise en circuit d'une machine, un organe d'obturation dégage automatiquement la section transversale de la conduite d'aspiration (2) concernée et l'obture lors de la mise hors de circuit de la machine en question, ce dispositif comprenant une chambre (3) qui est disposée dans la conduite d'aspiration (2) et est pourvue d'une entrée (4) d'air ajouté, dans laquelle l'organe d'obturation en forme de volet (5) est monté, pivotant sur un axe (6), à l'aide d'un organe de levage (7), afin de pouvoir passer en position d'ouverture ou de fermeture de la section transversale de la conduite d'air sortant et d'air ajouté,
caractérisé en ce que
le volet (5) est conçu de sorte à former un volet principal (5) qui pivote, grâce à un organe de levage (7), pour passer en position ouverte ou en position fermée, un volet d'entrée d'air ajouté (9) séparé, pivotant sur un axe (8) et relié à un mécanisme à ressorts (14/18, 19, 20/31, 32, 20) étant subordonné à ce volet principal (5)
et que,
ce faisant, le volet principal (5) et le volet d'air ajouté (9), pivotant autour d'un axe commun ou chacun sur son propre axe, ces propres axes (6, 8) étant disposés parallèlement, sont fixés au palier (10) ou à un cadre de montage (17) de la chambre (3).

2. Dispositif de commande selon la revendication 1,
caractérisé en ce que,
le volet principal (5) étant en position de fermeture, le volet d'air ajouté (9) se met en position oscillante de sorte à ouvrir plus ou moins l'entrée (4) pour laisser pénétrer l'air ajouté afin de maintenir la vitesse d'aspiration minimum dans la chambre (3) et dans la conduite d'aspiration (2) et que, lors du pivotement du volet principal (5) en position ouverte, ce volet d'air ajouté (9) est pivotée en position de fermeture obturant l'entrée d'air ajouté (4) par le volet principal (5) et le mécanisme à ressorts (14/18, 19, 20/31, 32, 20).

3. Dispositif de commande selon la revendication 1 ou 2,
caractérisé en ce que
l'entrée d'air ajouté (4) et le volet d'air ajouté (9) sont disposés en aval du volet principal (5), dans la chambre (3), dans le sens d'écoulement du courant.

4. Dispositif de commande selon l'une des revendication 1 à 3,
caractérisé en ce que
l'organe de levage (7) du volet principal (5) est formé par un cylindre commandé pneumatiquement ou électromagnétiquement, dont l'une des extrémités est montée, articulée, dans un logement (10) faisant saillie hors de la chambre (3), tandis que l'autre extrémité est montée, articulée, sur un levier (13) du volet principal (5), dans les points de pivotement (11, 12).

5. Dispositif de commande selon l'une des revendication 1 à 4,
caractérisé en ce que
le volet d'air ajouté (9) est soumis à l'action d'un ressort de traction (14) qui agit sur lui, contre le courant d'air ajouté, en fermant légèrement, et dont l'une des extrémités est fixée à un levier (15) du volet d'arrivée d'air ajouté (9), tandis que son autre extrémité est fixée au palier (10).

6. Dispositif de commande selon l'une des revendication 1 à 5,
caractérisé en ce que
les leviers (13, 15) du volet principal (5) et du volet d'entrée d'air ajouté (9) font saillie à partir du palier pivotant (6, 8) en prolongement angulaire par rapport aux volets (5, 9).

7. Dispositif de commande selon l'une des revendication 1 à 6,
caractérisé en ce que
l'organe de levage (7) du volet principal (5) se meut dans le sens de l'écoulement du courant d'air ajouté (A) et que le ressort de traction (14) du volet d'air ajouté (9) s'étend dans la direction opposée.

8. Dispositif de commande selon l'une des revendication 1 à 5,
caractérisé en ce que
le volet d'entrée d'air ajouté (9) est relié, articulé, à distance de son axe de pivotement (8), à un levier à genouillère (18), monté pivotant à un cadre de montage (17) et que le levier à genouillère (18) est relié, d'une part, à un ressort de traction (19) attaquant le volet principal (5), et, d'autre part, à un organe d'amortissement (20) - de préférence un ressort pneumatique, articulé sur le cadre de montage (17).

9. Dispositif de commande selon la revendication 8,
caractérisé en ce que
le levier à genouillère (18) est formé par un levier coudé (22) à deux bras relié, articulé, au cadre de montage (17) avec un pivot (21) et un levier (25) à deux bras dont une extrémité est reliée, articulée, au volet d'air ajouté (9), avec un premier pivot (23), et au levier coudé (22) avec un deuxième pivot (25), le ressort de traction (19) étant disposé entre l'extrémité libre du deuxième levier (25) et un levier prolongé (13) du volet principal (5), tandis que l'organe d'amortissement (20) est disposé entre l'extrémité libre du levier coudé (22) et le cadre de montage (17), dans les points d'articulation (26, 27).

10. Dispositif de commande selon la revendication 8 ou 9,
caractérisé en ce que
le deuxième levier (25) du levier à genouillère (18) et le levier (13) du volet principal (5) sont pourvus chacun de plusieurs points de fixation (28, 29) pour le ressort de traction (19) aux fins de réglage de la force de traction exercée sur le volet d'air ajouté (9).

11. Dispositif de commande selon l'une des revendication 1 à 5,
caractérisé en ce que
le volet principal (5) est relié, d'une part, avec un organe de levage (7) en forme de cylindre à Commande pneumatique ou électromagnétique, qui le fait pivoter en position libérant la conduite d'aspiration (2), et, d'autre part, avec un ressort de traction (30) qui amène le volet principal (5) en position de fermture, obturant la conduite d'aspiration (2), et que
le volet d'air ajouté (9) est relié à un tirant à câble (31) avec ressort de traction (32) et un organe d'amortissement (20) en forme de ressort à gaz, le tirant à câble (31) attaquant le volet principal (5) et le volet d'air ajouté (9) (fig. 4).

12. Dispositif de commande selon revendication 11,
caractérisé en ce que
l'organe de levage (7) est attaque, articulé entre le levier prolongé (13) du volet principal (5) et le palier support (10) du cadre de montage (17),
le tirant à câble (31) est fixé, à une extrémité, au levier prolongé (13) du volet principal (5), conduit autour d'un rouleau (33) fixé au palier support (10) et attaque, avec son autre extrémité, le volet d'air ajouté (9) à intervalle de son axe de pivotement (8) et que
l'organe d'amortissement (20) est maintenu entre le palier support (10) et le volet d'air ajouté (9), étant articulé dans les points de pivotement (36, 28).

13. Dispositif de commande selon revendication 11 ou 12,
caractérisé en ce que
le levier prolongé (13) du volet principal (5) et le volet d'air ajouté (9) présente chacun plusieurs points de fixation (28, 29) pour la fixation réglable du tirant à câble (31), du ressort de traction (30) et de l'organe d'amortissement (29) aux fins de réglage de la force de traction et de pression.

14. Dispositif de commande selon l'une des revendication 11 à 13,
caractérisé en ce que
les points de fixation (28, 29) sont formés par des barres (34) fixées au levier prolongé (13) du volet principal (5) et au volet d'air ajouté (9) (9), transversalement par rapport à leurs axes de pivotement (6, 8), ces barres (34) étant pourvues chaucne d'une rangée de trous (28, 29) ou de tenons et le levier prolongé (13) du volet principal (5) présentant un palier support (35) pour le levier de levage (7).

15. Dispositif de commande selon l'une des revendication précédentes,
caractérisé en ce que
le ressort de traction (30), qui amène le volet principal (5) en position de fermeture, présente un tendeur (38) qui permet de régler manuellement la précontrainte du ressort de traction.

16. Dispositif de commande selon l'une des revendication 1 à 6,
caractérisé en ce que
le volet à air ajouté (9) est relié à un ressort de traction (39) qui attaque le levier prolongé (13) du volet principal (5) et le volet à air ajouté (9) et fait pivoter le volet à air ajouté (9) en position oscillante obturant ou dégageant l'entrée d'air ajouté (4) en dépendance du volet principal (5), ce ressort de traction (39) présentant un tendeur (40) qui permet de régler manuellement sa précontrainte.

17. Dispositif de commande selon revendication 16,
caractérisé en ce que
un organe de réglage flexible (41), de préférence une chaîne à articulations avec tendeur (42), est disposé entre le palier support (10) du cadre de montage (17) et le ressort de traction (39) accouplé au volet à air ajouté (9) afin de permettre de régler la précontrainte et l'angle d'attaque ( ) du ressort de traction.

18. Dispositif de commande selon revendication 17,
caractérisé en ce que
le ressort de traction (39), l'organe de réglage (41) et le tendeur (40) du ressort de traction (39) sont articulés dans un point d'attqaue commun (P) où ils convergent en forme d'étoile.
